# EUROPEAN PATENT APPLICATION

(11) **EP 4 631 816 A1**
(43) Date of publication of application: **15.10.2025**
(21) Application number: 23908910.5
(22) Date of filing: 18.04.2023
(51) Int. Cl.: B60W 50/02, G05D 1/20

(54) **VEHICLE FAULT PROCESSING METHOD AND VEHICLE CHIP**

(30) Priority: 30.12.2022 CN 202211732591
(71) Applicant: Sanechips Technology Co., Ltd., Shenzhen, Guangdong 518055 (CN)
(72) Inventor: LEI, Guang, Shenzhen, Guangdong 518055 (CN); HUANG, Xinxing, Shenzhen, Guangdong 518055 (CN)
(74) Representative: Pennacchio, Salvatore Giovanni
(86) International application number: PCT/CN2023/089037
(87) International publication number: WO 2024/138960

(57) **Abstract**

Embodiments of the present invention provide a vehicle fault processing method and a vehicle chip. The vehicle chip comprises: a large computing power calculation unit, configured to perform target perception on video data to obtain a first target perception result; an information fusion unit configured to determine, according to the sensing data, whether the first target perception result of the large computing power calculation unit is correct, determine a second target perception result according to sensing data and a first target perception result, which can solve the problem in the related art that a large computing power calculation unit of a vehicle chip cannot meet a requirement for a vehicle-mounted security level; performing target perception by means of a large computing power calculation unit, and an information fusion unit fusing sensing data with a first target perception result to obtain a second target perception result, on the basis of reducing the security function level of the large computing power calculation unit, the accuracy of the large computing power calculation unit in sensing the target is ensured by the information fusion unit, so that the chip can meet the requirements of the vehicle security level.

## Description

### Cross-Reference to Related Application

The present invention is based on Chinese patent application CN 202211732591.2 filed on 30 December 2022 and entitled "Vehicle fault processing method and vehicle chip", and claims the priority of the patent application, the invention of which is incorporated herein by reference in its entirety.

### Technical Field

Embodiments of the present invention relate to the field of chip function security, and in particular, to a vehicle fault processing method and a vehicle chip.

### Background

Automatic driving, instead of manual driving, has been a trend. However, an automatic vehicle driving system receives sensing and positioning information of a sensor to perform vehicle behavior decision and control, and how to ensure safe and stable running of a vehicle in the whole process is particularly important. In the prior art, an automatic driving algorithm chip is generally at a QM level, and cannot meet a requirement of a vehicle-mounted safety level, furthermore, current automatic driving software systems cannot ensure 100% stable running, and there is a failure condition such as a sensor, an algorithm, and communication, the existing diagnosis policy cannot identify a fault and perform fault fusion diagnosis processing, and cannot ensure that a vehicle can continue to run stably in this case, or safety stopping in case of serious failure.

For the problem in the related art that the large computing power calculation unit of the autopilot algorithm chip cannot meet the requirement of the vehicle-mounted safety level, no solution has been proposed.

### Summary

Embodiments of the present invention provide a vehicle fault processing method and a vehicle chip, so as to at least solve the problem in the related art that a large computing power calculation unit of a vehicle chip cannot meet a requirement for a vehicle-mounted safety level.

According to an embodiment of the present invention, there is provided the vehicle chip, wherein the vehicle chip includes:
a large computing power calculation unit, configured to perform target perception on video data of a vehicle sensor by running an automatic driving artificial intelligence algorithm on the video data, so as to obtain a first target perception result, wherein a functional security level of the large computing power calculation unit is a first level; and
an information fusion unit, configured to run a monitoring algorithm to determine, according to sensing data of the vehicle sensor, whether the first target perception result of the large computing power calculation unit is correct, when a determination result is yes, determine a second target perception result according to the sensing data and the first target perception result, wherein a function security level of the information fusion unit is a second level, and the functional security level of the second level is higher than the functional security of the first level, the sensing data includes the video data or a portion of the video data.

According to another embodiment of the present invention, also provided is a vehicle fault processing method, which is applied to the vehicle chip. The method includes:
a first target perception result is obtained, by means of a large computing power calculation unit, by running an automatic driving artificial intelligence algorithm on video data of a vehicle sensor to perform target perception on the video data, wherein a functional security level of the large computing power calculation unit is a first level;
a monitoring algorithm is run, by means of an information fusion unit, to determine whether the first target perception result of the large computing power calculation unit is correct according to sensing data of the vehicle sensor, when a determination result is yes, a second target perception result is determined according to the sensing data and the first target perception result, wherein a function security level of the information fusion unit is a second level, and the functional security level of the second level is higher than the functional security of the first level, the sensing data includes the video data or a portion of the video data.

According to another embodiment of the present invention, a computer-readable storage medium is further provided. The storage medium stores a computer program, wherein the computer program is configured to execute the steps in any one of the method embodiments when running.

According to another embodiment of the present invention, also provided is an electronic device, including a memory and a processor, wherein the memory stores a computer program, and the processor is configured to run the computer program so as to execute the steps in any one of the method embodiments.

### Brief Description of the Drawings

Figure 1 is a block diagram of the vehicle chip according to an embodiment of the present invention;
Figure 2 is a block diagram of the vehicle chip according to an optional embodiment of the present invention;
Figure 3 is a schematic structural diagram of the vehicle chip according to an optional embodiment of the present invention;
Figure 4 is a flowchart of a vehicle fault processing method according to an embodiment of the present invention;
Figure 5 is a flowchart of a vehicle fault processing method according to an optional embodiment of the present invention;
Figure 6 is a flowchart of a start phase of a vehicle chip according to an embodiment of the present invention;
Figure 7 is a flowchart of an operation phase of the vehicle chip according to an embodiment of the present invention.

### Detailed Description of the Embodiments

Embodiments of the present invention will be described below in detail with reference to the accompanying drawings and in conjunction with embodiments.

It should be noted that, terms such as "first" and "second" in the description, claims, and accompanying drawings of the present invention are used to distinguish similar objects, but are not necessarily used to describe a specific sequence or order.

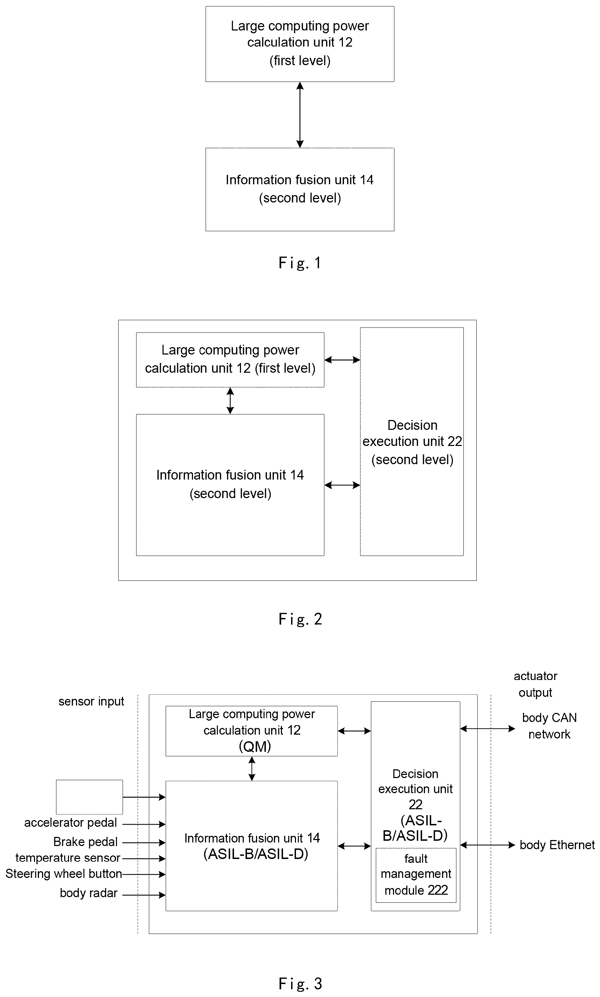

An embodiment of the present invention provides a vehicle chip. Figure 1 is a block diagram of a vehicle chip according to an embodiment of the present invention. As shown in figure 1, the vehicle chip includes:
a large computing power calculation unit 12, configured to perform target perception on video data of a vehicle sensor by running an automatic driving artificial intelligence algorithm on the video data, so as to obtain a first target perception result, wherein a functional security level of the large computing power calculation unit is a first level; and
an information fusion unit 14, configured to run a monitoring algorithm to determine, according to sensing data of the vehicle sensors, whether the first target perception result of the large calculation force computation unit is correct, when a determination result is yes, determine a second target perception result according to the sensing data and the first target perception result, wherein a function security level of the information fusion unit is a second level, and the functional security level of the second level is higher than the functional security of the first level, the sensing data includes the video data or a portion of the video data.

By means of the described vehicle chip, the problem in the related art that a large computing power calculation unit of a vehicle chip cannot reach a requirement for a vehicle-mounted safety level can be solved, performing target perception by a large computing power calculation unit, and after determining that a first target perception result of the large computing power calculation unit is correct by an information fusion unit, a first target perception result is fused via sensing data to obtain a second target perception result, and on the basis that a security function level of a large computing power calculation unit is reduced, the information fusion unit ensures the accuracy of target perception of the large computing power calculation unit, so that the chip can meet the requirement of the vehicle-mounted safety level.

In this embodiment, the large computing power calculation unit can perform target perception according to one or more pieces of video data, specifically, determine whether a target object appears based on video data, and if so, perceive a target, i.e. obtain the first target perception result.

In an embodiment, the information fusion unit 14 is further configured to perform target recognition on the sensing data to obtain a target recognition result; determine whether the first target perception result is correct according to the target categorization result; and if the determination result is yes, fuse the target recognition result with the first target perception result to obtain the second target perception result.

If the first target perception result of the large computing power calculation unit is that there are a first target and a second target, and the perception results of the first target is two, the perception result of the second target is one. Target recognition is performed on the sensing data by an information fusion unit, so as to obtain a target recognition result. The target recognition result includes three recognition results of the first target and two recognition results of the second target, i.e. by means of target recognition, it is determined that the first target and the second target indeed exist, and thus it can be determined that a sensing result of the first target is correct. Then, the information fusion unit may fuse the target recognition result and the first target perception result, where the target recognition result may specifically include a target, a speed, a size, a distance, and the like of the target. Specifically, two sensing results of a first target and three recognition results are fused, and one sensing result and two recognition results of a second target are fused. In this case, the two second target perception result is two, the first includes the first target and the speed, size, distance, etc. of the second target; the second includes the second target, the speed, size, distance, etc. of the second target.

Figure 2 is a block diagram of a vehicle chip according to an optional embodiment of the present invention. As shown in figure 2, the information fusion unit 14 is further configured to perform fault monitoring on the vehicle chip to obtain a fault monitoring result; the above-mentioned vehicle chip further includes: a decision execution unit 22 configured to determine, according to a pre-set corresponding relationship between a fault monitoring result and a fault priority, a target fault priority corresponding to the fault monitoring result; perform hierarchical control on a vehicle chip according to a target fault priority and a second target perception result, wherein a function security level of the decision execution unit is a second level.

In an embodiment, the decision execution unit 22 is further configured to, if the target fault priority is a first priority, perform interruption processing on a fault module corresponding to the vehicle chip; if the target fault priority is a second priority, reset a fault module corresponding to the vehicle chip; if the target fault priority is a third priority, notify a peripheral circuit to perform hard reset processing on a vehicle chip; if the target fault priority is a fourth priority, notify other chips to perform fault processing; the first priority is a fault that can be processed by the software itself, the second priority is a fault that can be processed by the hardware itself, the third priority is a fault that cannot be processed but can be restored by the hardware itself, and the fourth priority is a fault that cannot be processed and cannot be restored by the hardware itself.

In an embodiment, the decision execution unit 22 is further configured to report a processor corresponding to the vehicle chip in an interruption mode, so as to perform interruption processing by means of the processor.

In an embodiment, the decision execution unit 22 is further configured to initiate a voice alarm; initiate an image alarm; control a vehicle to stop close; and/or perform degraded use on a module corresponding to the vehicle chip.

In an embodiment, the information fusion unit 14 is further configured to preprocess video data collected by the vehicle sensor; and send the pre-processed sensing data to the large computing power calculation unit 12; the large computing power calculation unit 12 is further configured to perform target perception on the preprocessed video data to obtain the first target perception result.

In an embodiment, the decision execution unit 22 includes a fault management module, and the fault management module is configured to determine, according to a pre-set corresponding relationship between fault monitoring results and fault priorities, a target fault priority corresponding to the fault monitoring results; perform hierarchical control on the vehicle chip according to the target fault priority and the second target perception result, that is, the classification control of the fault is intensively continued by the fault management module, and partial functions of the fault management module are implemented by the information fusion unit 14, that is, a partial fault may be processed in the information combining unit 14, and if the processing fails, the fault is reported to the decision execution unit 22 for processing.

In this embodiment, the first level is a QM grade, and the second level is an ASIL-B grade or an ASIL-D grade.

The fault monitoring result includes a hardware monitoring result and a software monitoring result, wherein the hardware monitoring result includes a memory ECC fault, a double-core lock step fault, an interface-type fault, an internal bus fault, a sensor fault, a vehicle body chassis fault, a display output fault, and an actuator fault.

The present embodiment is applied to the realization of function security of a chip for a large computing power vehicle. Functional security of a sensing part is disassembled into QM + ASIL-B (ASIL-D), and a real-time monitoring algorithm (ASIL-B/ASIL-D) is operated by an information fusion unit to perform periodic comparison on target perception results (i.e. corresponding to the described first target perception result) of a real-time and high-performance large computing power calculation unit, so as to satisfy functional security requirements for reaching ASIL-B/ASIL-D as a whole; an integrated functional security island, wherein hardware controls initiation of an LBIST/MBIST to complete self-detection of the functional security island, thereby improving the coverage rate of latent faults; an internal fault (a memory ECC fault, a dual-core lock step fault, an interface-type fault, an internal bus fault, etc.) of a vehicle chip and a peripheral fault (a sensor fault, a vehicle body chassis fault, a display output fault, an actuator fault, etc.) of the vehicle chip can be processed, and centralized management and hierarchical processing of a fault type are realized by means of a decision execution unit; different units are highly integrated, and different ASIL levels are isolated from each other, thereby avoiding mutual influence.

This embodiment is mainly applied to a scenario in which a large computing power calculation unit and function security are required when automatic driving and intelligent cabin are equivalent in the automotive electronic field. This embodiment can achieve function security of a large computing power vehicle chip. A vehicle body sensor input (including but not limited to a camera, a radar, an accelerator/brake pedal, a temperature sensor, and a vehicle body steering wheel key) is connected to a vehicle chip through a communication interface, and the vehicle chip delivers an execution result to a decision execution unit through a vehicle body network (including but not limited to CAN and Ethernet) or directly displays and outputs an image. When a sensor fault, a fault (a hardware fault or a software fault) of a large computing power calculation unit, a fault (a hardware fault or a software fault) of an information fusion unit and a fault (a hardware fault or a software fault) of a decision execution unit are detected, according to a pre-set fault priority, a corresponding module is controlled to be reset, to give an alarm, to be used demoted, or to control the vehicle to stop at a safe side.

Figure 3 is a structural schematic diagram of a vehicle chip according to an optional embodiment of the present invention. As shown in figure 3, the chip mainly includes: a large computing power calculation unit 12, an information fusion unit 14 and a decision execution unit 22.

The large computing power calculation unit 12 serves as a first functional layer and a perception layer, and the functional security level of the large computing power calculation unit 12 is a QM level, i.e. there is no need to perform additional functional security hardware design on the large computing power calculation unit 12; the service function thereof is mainly to provide a hardware running environment for an algorithm with a complex amount of calculation, such as an automatic driving Al algorithm, and the internal composition includes, but is not limited to, a large computing power CPU, a GPU, an Al core, an on-chip memory, and the like.

An information fusion unit 14, as a second functional layer and a monitoring layer, with a functional security level being an ASIL-B or an ASIL-D level, monitors, by means of running a real-time monitoring algorithm and taking hardware and software of a first functional layer as a whole, a target perception result of the running of the first functional layer, so as to satisfy functional security requirements of a perception layer; at the same time, in terms of hardware design, functional security hardware designs such as a communication interface (CAN//MIPI, etc.) security mechanism, a CRC engine, a DPC security mechanism, dual-core locking and memory ECC are added, and a hardware random fault of an interface IP and an internal component thereof is identified so as to satisfy functional security requirements of an ASILB/ASILD thereof; the service function is mainly to perform fusion calculation on vehicle body information, a first functional layer AI target recognition result and a radar/ultrasonic recognition result to generate a final target recognition result.

The decision execution unit 22 serves as a third fault management layer and an execution layer, and the functional security level is an ASIL-B or an ASIL-D level, a function security island and an execution function are realized. In the present layer, a centralized fault management module 222 is adopted, and a service can be combined by means of software, flexibly mapping a hardware random fault (a memory ECC fault, a dual-core lock step fault, an interface-type fault, an internal bus fault, a sensor fault, a display output fault, an actuator fault, etc.) and a software fault of the whole vehicle chip to four levels: a first level being a fault that can be processed thereby, a processor of the present level is reported by means of interruption, and interruption processing is performed, a voice/image alarm is sent, and the use of parking or degradation by a vehicle is controlled; the second level is that the hardware itself can handle the fault, and the specified module is reset by means of a pre-made reset network; a third level is that hardware itself cannot be processed but can recover a fault, and a peripheral circuit is notified via an Error Pin to perform hard reset processing on the vehicle chip; the fourth level is that the hardware itself cannot process and cannot recover the failure, and the other ECUs are notified of the failure processing by the Error Pin. The service functions thereof are mainly: planning and controlling the route and operation of the vehicle according to the result of the target identification and the vehicle operation state information, etc.

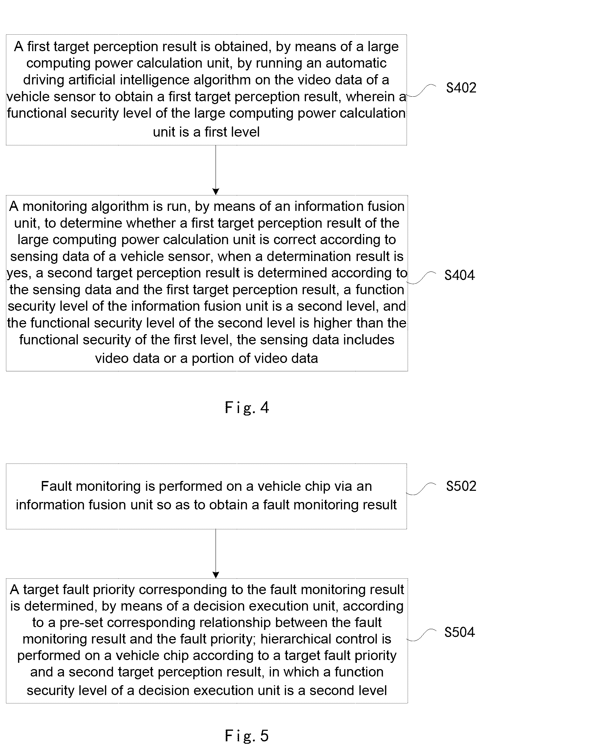

The present embodiment further provides a vehicle fault processing method running on the described vehicle chip, figure 4 is a flowchart of a vehicle fault processing method according to an embodiment of the present invention. As shown in figure 4, the flow includes the following steps:
Step S402, a first target perception result is obtained, by means of a large computing power calculation unit, by running an automatic driving artificial intelligence algorithm on the video data of a vehicle sensor to obtain a first target perception result, wherein a functional security level of the large computing power calculation unit is a first level;
In this embodiment, the large computing power calculation unit can perform target perception on one or more pieces of video data, specifically determine whether a target object appears based on video data, and if so, perceive a target, i.e. obtain a first target perception result.

Step S404, a monitoring algorithm is run, by means of an information fusion unit, to determine whether a first target perception result of the large computing power calculation unit is correct according to sensing data of a vehicle sensor, when a determination result is yes, a second target perception result is determined according to the sensing data and the first target perception result, a function security level of the information fusion unit is a second level, and the functional security level of the second level is higher than the functional security of the first level, the sensing data includes video data or a portion of video data.

The vehicle sensor in present embodiment may specifically include a camera, a radar, an ultrasonic wave, and the like. There are a plurality of vehicle sensors, and in general, the vehicle sensors acquire sensing data by means of an information fusion unit, send video data in the sensing data to a large computational force calculation unit, and the large computational force calculation unit performing target perception, the information fusion unit acquires a first target perception result of the large computing power calculation unit, and determines, based on the sensing data, whether the first target perception result of the large computing power calculation unit is correct, that is, it is determined whether a true target object appears according to the sensing data, and if it is determined that the first target perception result is correct, and fusing the sensing data with the first target perception result to obtain a second target perception result.

The step S404 may specifically include: target recognition is performed, by means of an information fusion unit, on the sensing data to obtain a target recognition result; it is determined whether the first target perception result is correct according to the target categorization result; and when a determination result is yes, the target recognition result is fused with the first target perception result to obtain a second target perception result.

If the first target perception result of the large computing power calculation unit is that there are a first target and a second target, and the perception results of the first target are two, the perception result of the second target is one. Target recognition is performed on the sensing data by means of an information fusion unit, so as to obtain a target recognition result. The target recognition result includes three recognition results of the first target and two recognition results of the second target, i.e. by means of target recognition, it is determined that the first target and the second target indeed exist, and thus it can be determined that a sensing result of the first target is correct. Then, the information fusion unit may fuse the target recognition result and the first target perception result, where the target recognition result may specifically include a target, a speed, a size, a distance, and the like of the target. Specifically, two sensing results of a first target and three recognition results are fused, and one sensing result of a second target and two recognition results are fused. In this case, there are two second target perception results, the first including a first target and the speed, size, distance, etc. of the second target; the second includes the second target, the speed, size, distance, etc. of the second target.

By means of steps S402 to S404, the problem in the related art that a large computing power calculation unit of a vehicle chip cannot meet a requirement for a vehicle-mounted safety level can be solved, performing target perception by means of a large computing power calculation unit, and after determining that a first target perception result of the large computing power calculation unit is correct by means of an information fusion unit, a first target perception result is fused via sensing data to obtain a second target perception result, and on the basis that a security function level of a large computing power calculation unit is reduced, the information fusion unit ensures the accuracy of target perception of the large computing power calculation unit, so that the chip can meet the requirement of the vehicle-mounted safety level.

Figure 5 is a flowchart of a vehicle fault processing method according to an optional embodiment of the present invention. As shown in figure 5, the method further includes:
Step S502, fault monitoring is performed on a vehicle chip via an information fusion unit so as to obtain a fault monitoring result; furthermore, fault monitoring can be performed based on at least one of the following: an interface IP security mechanism, an external sensor fault code and a heartbeat mechanism;
Step S504, a target fault priority corresponding to the fault monitoring result is determined, by means of a decision execution unit, according to a pre-set corresponding relationship between the fault monitoring result and the fault priority; hierarchical control is performed on a vehicle chip according to a target fault priority and a second target perception result, in which a function security level of a decision execution unit is a second level.

In the step S504, the performing classification control on the vehicle chip according to the target fault priority and the second target perception result may specifically include: if the target fault priority is the first priority, interrupting a fault module corresponding to the vehicle chip; if the target fault priority is a second priority, resetting a fault module corresponding to the vehicle chip; if the target fault priority is a third priority, notifying a peripheral circuit to perform hard reset processing on the vehicle chip; if the target fault priority is a fourth priority, notifying other chips to perform fault processing; the first priority is a fault that can be processed by the software itself, the second priority is a fault that can be processed by the hardware itself, the third priority is a fault that cannot be processed but can be restored by the hardware itself, and the fourth priority is a fault that cannot be processed and cannot be restored by the hardware itself.

Further, based on the decision execution unit, a processor corresponding to the vehicle chip is reported in an interruption manner, so as to perform interruption processing by means of the processor.

In one embodiment, by means of the decision execution unit, a voice alarm may also be initiated; an image alarm is initiated; a vehicle is controlled to stop close; and/or a module corresponding to the vehicle chip is degraded.

In this embodiment, the first level is a QM grade, and the second level is an ASIL-B grade or an ASIL-D grade.

The fault monitoring result includes a hardware monitoring result and a software monitoring result, wherein the hardware monitoring result includes a memory ECC fault, a double-core lock step fault, an interface-type fault, an internal bus fault, a sensor fault, a vehicle body chassis fault, a display output fault, and an actuator fault.

The following describes implementation of function security of a large computing power vehicle chip by taking automatic driving as an embodiment, which includes a start phase and an operation phase.

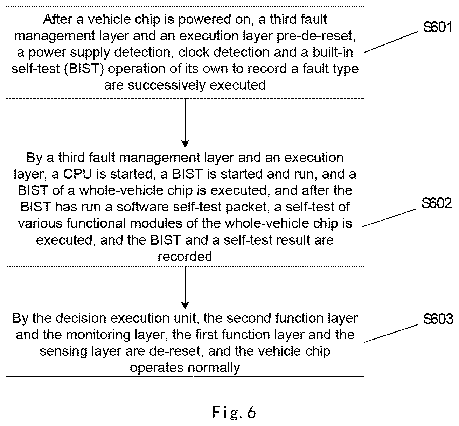

Figure 6 is a flowchart of a start phase of a vehicle chip according to an embodiment of the present invention. As shown in figure 6, the start phase mainly includes the following steps:
Step S601, after a vehicle chip is powered on, a third fault management layer and an execution layer pre-de-reset, a power supply detection, clock detection and a built-in self-test (BIST) operation of its own to record a fault type are successively executed; such as a fatal fault occurs (for embodiment, a hardware fault of a CPU of a current layer, a fault of a memory space control or storage unit for running a memory, a fault of a vehicle body control CAN or an Ethernet communication interface, etc.), a BEEP sound is output to warn a driver, and at the same time, starting is stopped; otherwise, the process proceeds to step S602.
Step S602, by a third fault management layer and an execution layer, a CPU is started, a BIST is started and run, and a BIST of a whole-vehicle chip is executed, and after the BIST has run a software self-test packet, a self-test of various functional modules of the whole-vehicle chip is executed, and the BIST and a self-test result are recorded; such as a fatal fault (such as a CPU hardware fault of a second functional layer or a monitoring layer, a memory space control of running memory, or a storage unit fault) occurs, a BEEP sound is output to warn a driver, and at the same time, starting is stopped; otherwise, step S603 is performed.
Step S603, by the decision execution unit 22, the second function layer and the monitoring layer, the first function layer and the sensing layer are de-reset, and the vehicle chip operates normally.

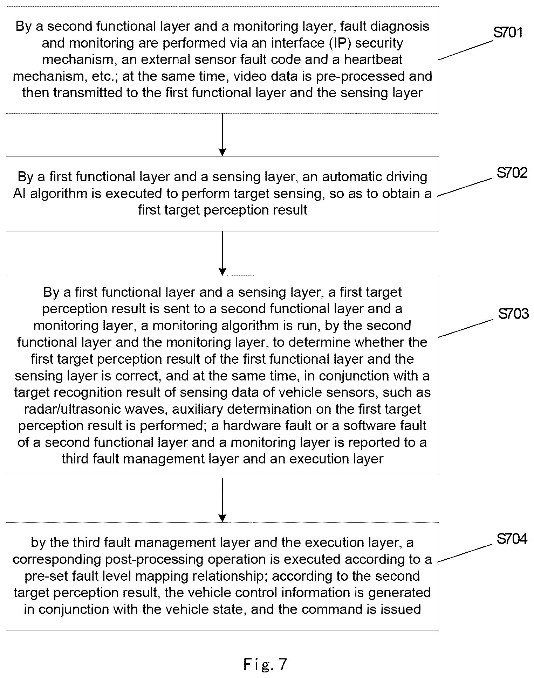

Figure 7 is a flowchart of a running phase of the vehicle chip according to an embodiment of the present invention. As shown in figure 7, the running phase mainly includes the following steps:
Step S701, by a second functional layer and a monitoring layer, fault diagnosis and monitoring are performed via an interface (IP) security mechanism, an external sensor fault code and a heartbeat mechanism, etc.; at the same time, video data is pre-processed and then transmitted to the first functional layer and the sensing layer, wherein the pre-processing mainly detects whether the video data has a problem, and transmits the video data to the first functional layer and the sensing layer only if there is no problem.
Step S702, by a first functional layer and a sensing layer, an automatic driving Al algorithm is executed to perform target sensing, so as to obtain a first target perception result.
Step S703, by a first functional layer and a sensing layer, a first target perception result is sent to a second functional layer and a monitoring layer, a monitoring algorithm is run, by the second functional layer and the monitoring layer, to determine whether the first target perception result of the first functional layer and the sensing layer is correct, and at the same time, in conjunction with a target recognition result of sensing data of vehicle sensors, such as radar/ultrasonic waves, auxiliary determination on the first target perception result is performed; a hardware fault or a software fault of a second functional layer and a monitoring layer is reported to a third fault management layer and an execution layer; and in the second functional layer and the monitoring layer, a fusion calculation is performed on a first target perception result and a target recognition result of sensing data, so as to generate a second target perception result.
Step S704, by the third fault management layer and the execution layer, a corresponding post-processing operation is executed according to a pre-set fault level mapping relationship; according to the second target perception result, the vehicle control information is generated in conjunction with the vehicle state, and the command is issued through a body network (CAN-FD, Ethernet, LIN, etc.). Meanwhile, the decision execution unit 22 executes an internal security mechanism to detect the hardware failure of this unit (i.e. the decision execution unit 22) in real time. The fault of all the layers is sent to the fault management module 222 of the third decision execution unit 22, and the fault management module 222 performs the corresponding post-processing operation according to the preset fault level mapping relationship.

The arithmetical force calculation unit 12 of the QM function security level executes sensing; an ASIL-B/ASIL-D function security level information fusion unit 14; executing the monitoring algorithm of the ASIL-B/ASIL-D at the decision execution unit 22 to perform functional security monitoring on the large computing unit 12; at the same time, decision execution and function security island roles are undertaken.

Embodiments of the present invention also provide a computer readable storage medium. The computer readable storage medium stores a computer program, wherein the computer program is configured to execute the steps in any one of the described method embodiments during running.

In an exemplary embodiment, the computer readable storage medium may include, but is not limited to, any medium that can store a computer program, such as a USB flash drive, a Read-Only Memory (ROM for short), a Random Access Memory (RAM for short), a removable hard disk, a magnetic disk, or an optical disc.

Embodiments of the present invention further provide an electronic apparatus, including a memory and a processor. The memory stores a computer program. The processor is configured to run the computer program to execute steps in any one of the method embodiments.

In an exemplary embodiment, the electronic apparatus can further include a transmission device and an input/output device, wherein the transmission device is connected to the processor, and the input/output device is connected to the processor.

For specific embodiments in this embodiment, reference may be made to the embodiments described in the foregoing embodiments and exemplary embodiments, and details are not repeatedly described in this embodiment.

Obviously, those skilled in the art should understand that each module or each step of the present invention can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus, furthermore, in some cases, the shown or described steps may be executed in an order different from that described here, or they are made into integrated circuit modules respectively, or a plurality of modules or steps therein are made into a single integrated circuit module for implementation. As such, the present invention is not limited to any particular hardware and software combination.

The foregoing descriptions are merely exemplary embodiments of the present invention, but are not intended to limit the present invention. For those skilled in the art, the present invention may have various modifications and variations. Any modifications, equivalent replacements, improvements and the like made within the principle of the present invention shall fall within the scope of protection of the present invention.

## Claims

1. A vehicle chip, comprising:
a large computing power calculation unit, configured to perform target perception on video data of a vehicle sensor by running an automatic driving artificial intelligence algorithm on the video data, so as to obtain a first target perception result, wherein a functional security level of the large computing power calculation unit is a first level; and
an information fusion unit, configured to run a monitoring algorithm to determine, according to sensing data of the vehicle sensor, whether the first target perception result of the large computing power calculation unit is correct, when a determination result is yes, determine a second target perception result according to the sensing data and the first target perception result, wherein a function security level of the information fusion unit is a second level, and the functional security level of the second level is higher than the functional security of the first level the sensing data comprises the video data or a portion of the video data.

2. The vehicle chip according to claim 1, wherein
the information fusion unit is configured to perform target recognition according to the sensing data to obtain a target recognition result, and determine whether the first target perception result is correct according to the target recognition result.

3. The vehicle chip according to claim 1, wherein
the information fusion unit is further configured to perform fault monitoring on the vehicle chip to obtain a fault monitoring result;
the vehicle chip further comprises:
a decision execution unit, configured to determine, according to a pre-set corresponding relationship between a fault monitoring result and a fault priority, a target fault priority corresponding to the fault monitoring result; perform hierarchical control on the vehicle chip according to the target fault priority and the second target perception result, wherein a function security level of the decision execution unit is the second level.

4. The vehicle chip according to claim 3, wherein
the decision execution unit is further configured to, when the target fault priority is a first priority, perform interruption processing on a fault module corresponding to the vehicle chip;
when the target fault priority is a second priority, reset a fault module corresponding to the vehicle chip;
when the target fault priority is a third priority, notify a peripheral circuit to perform hard reset processing on the vehicle chip;
when the target fault priority is a fourth priority, notify other chips to perform fault handling;
the first priority is a fault that can be processed by software itself, the second priority is a fault that can be processed by hardware itself, the third priority is a fault that cannot be processed but can be restored by hardware itself, and the fourth priority is a fault that cannot be processed and cannot be restored by hardware itself.

5. The vehicle chip according to claim 4, wherein
the decision execution unit is further configured to report a processor corresponding to the vehicle chip in an interruption mode, so as to perform interrupt processing by means of the processor.

6. The vehicle chip according to claim 5, wherein
the decision execution unit is further configured to initiate a voice alarm; initiate an image alarm; control a vehicle to stop close; and/or degrade a module corresponding to the vehicle chip.

7. The vehicle chip according to claim 1, wherein
the information fusion unit is further configured to preprocess video data collected by the vehicle sensor, and send the preprocessed video data to the large computing power calculation unit;
the large computing power calculation unit is configured to perform target perception on the preprocessed video data to obtain the first target perception result.

8. The vehicle chip according to claim 3, wherein
the decision execution unit comprises a fault management module, wherein the fault management module is configured to determine, according to a pre-set corresponding relationship between a fault monitoring result and a fault priority, a target fault priority corresponding to the fault monitoring result; perform hierarchical control on the vehicle chip according to the target fault priority and the second target perception result, wherein some functions of the fault management module are realized by the information fusion unit.

9. The vehicle chip according to claim 1, wherein
the first level is a QM level, and the second level is an ASIL-B level or an ASIL-D level.

10. The vehicle chip according to any one of claims 1 to 9, wherein
the fault monitoring result comprises: a hardware monitoring result and a software monitoring result, wherein the hardware monitoring result comprises: a memory ECC fault, a dual-core lock step fault, an interface-type fault, an internal bus fault, a sensor fault, a vehicle body chassis fault, a display output fault, and an actuator fault.

11. A vehicle fault processing method, applied to a vehicle chip, the method comprising:
obtaining, by a large computing power calculation unit, a first target perception result by running an automatic driving artificial intelligence algorithm on video data of a vehicle sensor to perform target perception on the video data, wherein a functional security level of the large computing power calculation unit is a first level;
running, by an information fusion unit, a monitoring algorithm to determine, according to sensing data of the vehicle sensor, whether the first target perception result of the large computing power calculation unit is correct, when a determination result is yes, determining a second target perception result according to the sensing data and the first target perception result, wherein a function security level of the information fusion unit is a second level, and the functional security level of the second level is higher than the functional security level of the first level, the sensing data comprises the video data or a portion of the video data.

12. The method of claim 11, wherein the method further comprises:
performing, by the information fusion unit, fault monitoring on the vehicle chip to obtain a fault monitoring result;
determining, by a decision execution unit, a target fault priority corresponding to the fault monitoring result according to a pre-set corresponding relationship between fault monitoring results and fault priorities; performing hierarchical control on the vehicle chip according to the target fault priority and the second target perception result, wherein a function security level of the decision execution unit is the second level.

13. The method according to claim 11, wherein the performing, by the information fusion unit, fault monitoring on the vehicle driving system comprises:
performing, by the information fusion unit, fault monitoring based on at least one of the following: an interface IP security mechanism, an external sensor fault code and a heartbeat mechanism.
